Europäisches Patentamt

European Patent Office

Office européen des brevets

(11) Veröffentlichungsnummer: **0 193 533
B1**

# EUROPÄISCHE PATENTSCHRIFT

(45) Veröffentlichungstag der Patentschrift:
14.06.89

(51) Int. Cl.⁴: **B 23 B 3/16, B 23 Q 3/155**

(21) Anmeldenummer: 85901364.1

(22) Anmeldetag: 14.03.85

(86) Internationale Anmeldenummer:
PCT/DE 85/00084

(87) Internationale Veröffentlichungsnummer:
WO 85/04126 (26.09.85 Gazette 85/21)

(54) DREHMASCHINE.

Verbunden mit 85730039.6/0157728 (europäische Anmeldenummer/Veröffentlichungsnummer) durch Entscheidung vom 11.08.87.

(30) Priorität: 17.03.84 DE 3410276

(43) Veröffentlichungstag der Anmeldung:
10.09.86 Patentblatt 86/37

(45) Bekanntmachung des Hinweises auf die Patenterteilung:
14.06.89 Patentblatt 89/24

(84) Benannte Vertragsstaaten:
AT CH DE GB IT LI

(56) Entgegenhaltungen:
AT-B- 354 221
DE-A- 1 804 630
DE-A- 2 044 187
DE-A- 3 244 084
DE-B- 1 602 810
DE-B- 2 318 778

Werkstatt und Betrieb, Vol. 111, Nr. 8, August 1978 (C. Hanser Verlag, München, DE); W. Kalmbach "CNC-Drehmaschine als Bearbeitungszentrum", Seiten 501 bis 504, siehe Seiten 502 und 503.
Patent Abstracts of Japan, Vol. 5, No. 39, 14 March 1981, (M-59) (711)

(73) Patentinhaber: H. Wohlenberg KG, GmbH & Co.,
Wohlenbergstrasse 6 - 8, D-3000 Hannover 1 (DE)

(72) Erfinder: STRATE, Hans, Peperfeld 29,
D-3000 Hannover 91 (DE)
Erfinder: SIMON, Hans-Dieter, Debberode 37,
D-3014 Laatzen 1 (DE)

(74) Vertreter: Thömen, Uwe, Dipl.-Ing., Patentanwalt U. Thömen Zeppelinstrasse 5, D-3000 Hannover 1 (DE)

## Beschreibung

Die Erfindung betrifft eine Drehmaschine gemäss dem Oberbegriff des Patentanspruchs 1.

Mit solchen Drehmaschinen lassen sich Rundkörper herstellen und bearbeiten. Es hat sich jedoch in der Fertigungspraxis gezeigt, dass Werkstücke mit einer Rundkörper-Grundform sehr oft nachfolgenden Fräs- oder Bohrbearbeitungen unterzogen werden müssen. Hierzu gehört beispielsweise die Fertigung von runden Zapfen mit Innen- und Aussengewinden grösserer Abmessungen.

Eine Möglichkeit besteht darin, das Werkstück nach der Drehbearbeitung in eine oder nacheinander sogar in mehrere teure andere, nur nach einem Bearbeitungsverfahren arbeitende Werkzeugmaschinen umzuspannen.

Um diesen Aufwand zu vermeiden, sind Maschinen entwickelt worden, mit denen Werkstücke komplett fertig bearbeitet werden können. Dies bedingt jedoch den Einsatz von unterschiedlichen Fertigungseinheiten, wie z.B. Revolverköpfen, Fräseinheiten, Schleifeinheiten, die sich ohne Kollision auf einer Maschine nicht gleichzeitig anbringen lassen. Daher hat man dort die betreffende Bearbeitungseinheit austauschbar ausgebildet, was bei schweren Maschinen aufgrund des erforderlichen hohen Einrichte- und Transportzeitaufwandes wirtschaftlich nicht immer vertretbar ist.

Durch die Zeitschrift «Werkstatt und Betrieb», Band 111, Nr. 8, August 1978, München; W. Kalmbach «CNC-Drehmaschine als Bearbeitungszentrum», Seiten 501–504, von der die Erfindung gemäss dem Oberbegriff des Patentanspruchs 1 ausgeht, ist bereits eine Drehmaschine bekannt, die den voranstehend geschilderten Forderungen teilweise entgegenkommt. Allerdings sind auch bei den bekannten Maschinen immer noch beachtliche Einrichte- und Transportzeiten erforderlich, wenn neben einer üblichen Drehbearbeitung auch mit einer vergleichbaren Effektivität andere Bearbeitungsverfahren, wie z.B. Bohren, Tiefbohren, Fräsen, Drehfräsen, Schleifen, Honen, Wirbeln durchgeführt werden sollen und somit eine Komplett-Bearbeitung von Rundkörper-Grundformen angestrebt wird.

Die Werkzeugaufnahme-Vorrichtung ist hier als Werkzeugkopf ausgebildet, und die antriebbare Spindeleinheit ist ortsfest angeordnet. Dadurch besteht eine Einschränkung hinsichtlich der insgesamt möglichen Bewegungs- bzw. Freiheitsgrade bei der Bearbeitung. Eine weitere Einschränkung ergibt sich dadurch, dass die Spindeleinheit lediglich an einer Seite mit einer Werkzeugaufnahme ausgerüstet ist. Da die Spindeleinheit ferner ortsfest angeordnet ist, kann der Fall eintreten, dass sie bei anderen Bearbeitungen hinderlich im Wege steht.

Der Erfindung liegt die Aufgabe zugrunde, eine Drehmaschine der im Oberbegriff des Anspruchs 1 genannten Art zu schaffen, welche eine erweiterte Komplett-Bearbeitung ermöglicht, ohne dass hohe Einrichte- und Transportzeiten anfallen.

Die Lösung dieser Aufgabe erfolgt durch die im kennzeichnenden Teil des Patentanspruchs 1 angegebenen Merkmale.

Die Ausbildung der Werkzeugaufnahme-Vorrichtung nach Art eines eine gewisse Höhe besitzenden Bearbeitungsturmes ist im Zusammenhang mit dem weiteren Merkmal, wonach die Spindeleinheit des Bearbeitungsturmes in der Höhe verstellbar ist von besonderer Bedeutung, weil dadurch zur kompletten Realisierung aller möglichen Arbeitsvorgänge auf einer Drehmaschine beigetragen wird. Die Höhenverstellbarkeit der Spindeleinheit schafft nämlich einen weiteren Freiheitsgrad in der Bewegung des von der Spindeleinheit angetriebenen Werkzeugs. Ausserdem ist es auch möglich, die Spindeleinheit im Bedarfsfalle aus dem Wege zu schaffen, wenn sie für eine Bearbeitung nicht benötigt wird bzw. die Bearbeitung in eine von der Hauptmaschinenachse abweichenden Ebene zu verlegen.

Durch das weitere Merkmal, wonach die Aufnahmevorrichtung zur lösbaren Befestigung von kompletten Bearbeitungseinheiten ausgebildet ist, wird der Anwendungsbereich der neuen Drehmaschine zusätzlich in vorteilhafter Weise unter Zeiteinsparung erweitert, und dies gilt auch für die Massnahme, die Spindeleinheit an ihren beiden Seiten mit einer Werkzeugaufnahme auszurüsten.

Vorzugsweise sind die Spindeleinheit und die Aufnahmevorrichtung an gegenüberliegenden Seiten des Bearbeitungsturms angeordnet, so dass in der Regel Drehschritte des Turms von 90° oder 180° erfolgen können, um das jeweils gewünschte Werkzeug in seine Arbeitsstellung zu bringen. Die Arretierung des Bearbeitungsturms kann jedoch in jeder gewählten Winkelstellung erfolgen, was sich auf einfache Weise durch bekannte Planzahnringe bewirken lässt.

Wenn die Spindel der Spindeleinheit gemäss einer anderen bevorzugten Ausführungsform der Erfindung einen unabhängigen, numerisch gesteuerten Antrieb besitzt, kann dieser anstelle der Antriebsvorrichtung für die Werkstückaufnahme in Funktion treten. Dabei ist die Antriebsvorrichtung für die Werkstückaufnahme in an sich bekannter Weise abkuppelbar und statt dessen ein numerisch steuerbarer Antrieb für eine exakte Winkelpositionierung oder eine numerisch gesteuerte Vorschubbewegung des Werkstücks betätigbar. Auf diese Weise ist z.B. ohne Werkzeugwechsel eine Drehbearbeitung und eine anschliessende Fräsbearbeitung möglich, wenn in der Aufnahmevorrichtung des Bearbeitungsturms ein Drehmeissel und an der Spindeleinheit ein Fräswerkzeug angebracht wird. Ausserdem ist eine Dreh-Fräsbearbeitung möglich, bei der sich nicht nur das Werkzeug, sondern auch das Werkstück dreht.

Ein sehr rascher Werkzeugwechsel lässt sich dadurch erreichen, wenn zumindest die an der Werkzeugaufnahme anzubringenden Werkzeuge bzw. Werkzeugeinheiten in einem Magazinschlitten angeordnet sind.

Dabei ist es zweckmässig, den Magazinschlitten hinter dem Reitstock anzuordnen und den Magazinschlitten mit dem Reitstock mechanisch zu verbinden, so dass er dessen Verschiebebewegung folgt. Hierdurch können die Umrüstzeiten verkürzt werden, wenn der Werkzeugschlitten für die Werkzeugübernahme am Reitstock vorbei bis vor den Magazinschlitten verfahrbar angeordnet ist. Natürlich kann der Magazinschlitten auch einen eigenen Vorschubantrieb besitzen.

Dabei ist vorzugsweise der Werkzeugschlitten für die Werkzeugübernahme am Reitstock vorbei bis vor den Magazinschlitten verfahrbar, so dass dort die Übergabe des Werkzeugs bzw. der Bearbeitungseinheit automatisch erfolgen kann.

Die Werkzeuge bzw. die Werkzeugeinheiten sind vorzugsweise auf jeweils einer gleich ausgebildeten Palette angeordnet, die kraft- und formschlüssig mit der Aufnahmevorrichtung am Bearbeitungsturm verbindbar ist. Dadurch ist es möglich, jede, auch schwere und umfangreiche Bearbeitungseinrichtung automatisch und programmgesteuert zu wechseln.

Die Aufnahmevorrichtung enthält dabei zwei aneinander angrenzende rechtwinklige Anlageflächen für die Palette, von denen eine kürzere horizontal und eine längere vertikal verläuft, wobei in der vertikalen Anlagefläche horizontal verlaufende Führungen vorgesehen sind, auf die die Platte von der Seite her aufschiebbar ist.

Vorzugsweise ist eine mittlere Führungsleiste und eine obere und untere Führungsleiste vorhanden, von denen die obere und untere Führungsleiste als Spannleisten ausgeführt sind. Hierdurch kann die Palette nach ihrer Positionierung auf einfache Weise festgelegt werden.

Um die Einführung zu erleichtern, sind die Spannleisten vorzugsweise an ihren freien, in Profilnuten der Palette eingreifenden Enden mit Laufrollen versehen.

Ferner sind in der horizontalen Anlagefläche Stützrollen angeordnet, die im Normalzustand unterhalb der Anlagefläche liegen, beim Palettenwechsel jedoch so weit anhebbar sind, dass sie über die Anlagefläche vorstehen. Hierdurch wird die Einschiebebewegung der Palette erheblich erleichtert.

Um sicherzustellen, dass die Palette auch tatsächlich ihre vorgegebene Betriebslage einnimmt, ist es zweckmässig, eine Pressvorrichtung vorzusehen, durch die die eingesetzte Palette an die horizontale Anlagefläche andrückbar ist.

Im Magazinschlitten ist zweckmässigerweise für jede Werkzeugeinheit ein Hydraulikantrieb vorhanden, durch den eine zugeordnete Palette in die Aufnahmevorrichtung einschiebbar und von dieser in das Magazin zurückbewegbar ist. Hierdurch ist ein rascher Werkzeugwechsel ohne Auswechseln aufwendiger Zusatzeinrichtungen möglich.

Vorzugsweise ist ein weiteres stationäres Magazin für Langwerkzeuge vorhanden, an das der Werkzeugschlitten heranfahrbar ist. Hierdurch ist es möglich, mit derselben Maschine auch z.B. Tiefbohrvorgänge oder Innendreharbeiten mit langen Bohrstangen vorzunehmen.

Die Erfindung wird nachfolgend anhand von in der Zeichnung dargestellten Ausführungsbeispielen näher erläutert. In der Zeichnung bedeuten:

Fig. 1 eine Draufsicht auf eine erfindungsgemäss ausgebildete Drehmaschine,

Fig. 2 eine Seitenansicht der in Fig. 1 dargestellten Maschine.

Fig. 3 den Bearbeitungsturm in Seitenansicht, Vorderansicht, Rückansicht und Draufsicht,

Fig. 4 eine Draufsicht auf den mit einem Drehwerkzeug ausgerüsteten Bearbeitungsturm in einer üblichen Bearbeitungs-Position,

Fig. 5 die Ausrüstung des Spindelantriebs mit je einem Fräswerkzeug in zwei um 180° versetzten Positionen,

Fig. 6 die Ausrüstung der Spindeleinheit mit einer Tiefbohreinrichtung,

Fig. 7 den Anbau und die Positionierung einer Bohrstangenausrüstung an der Aufnahmevorrichtung,

Fig. 8 den Anbau einer mit einem Antrieb versehenen Schleifspindel an der Aufnahmevorrichtung und

Fig. 9 die Befestigung einer Werkzeugpalette an der Aufnahmevorrichtung.

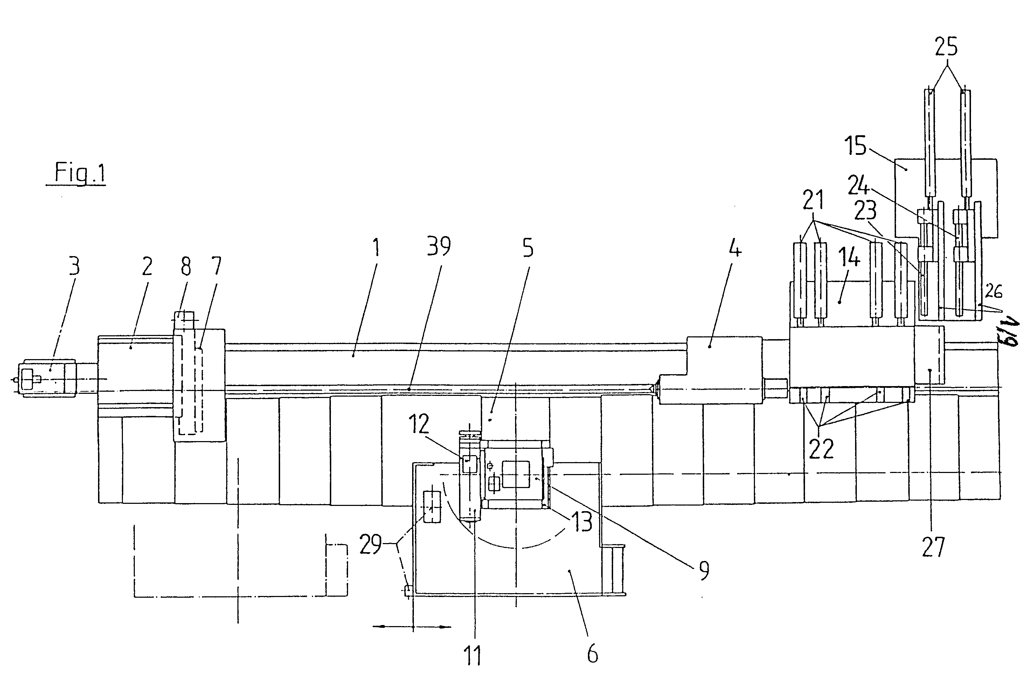

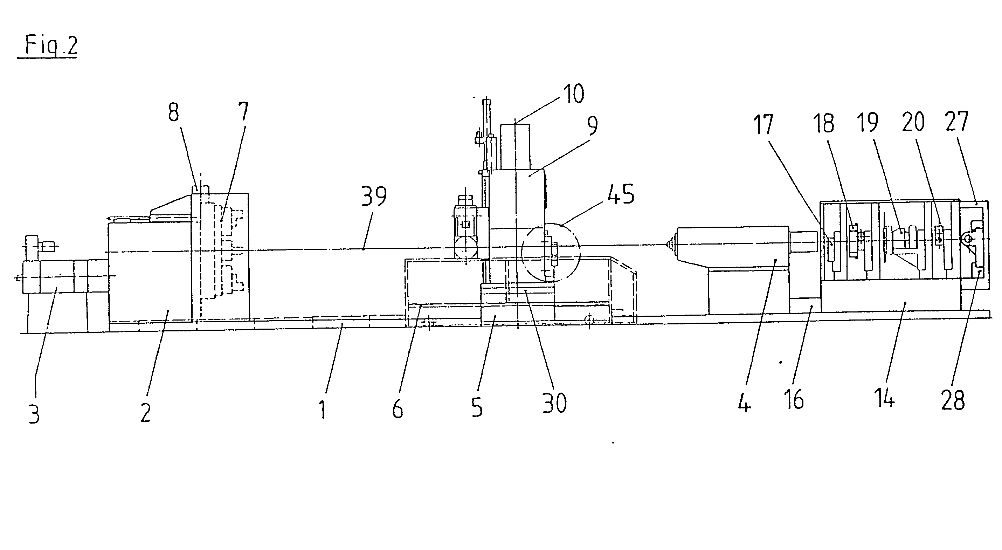

Die in Fig. 1 und 2 dargestellte Drehmaschine enthält ein Maschinenbett 1, einen Spindelkasten 2, eine dem Spindelkasten vorgeschaltete Antriebsvorrichtung 3, einen Reitstock 4 und einen Werkzeugschlitten 5, der mit einer Arbeitsbühne 6 auf dem Maschinenbett 1 verfahrbar ist. Ein nicht dargestelltes Werkstück kann zwischen einer als Futter oder Planscheibe ausgebildeten Werkstückaufnahme 7 und dem Reitstock 4 eingespannt und durch die Antriebsvorrichtung 3 über den Spindelkasten 2 in Drehung versetzt werden. Die Antriebsvorrichtung 3 kann ausgekuppelt werden. Die Werkzeugaufnahme 7 arbeitet dann als rotatorische Achse und ist durch einen numerisch steuerbaren Antrieb 8 antreibbar, mit dem exakte Winkelpositionen des Werkstücks eingestellt werden können oder eine numerisch gesteuerte Vorschubbewegung des Werkstücks bewirkt werden kann.

Auf dem Werkzeugschlitten 5 ist ein zentraler, später noch in Einzelheiten beschriebener Bearbeitungsturm 9 angebracht, der um eine vertikale Achse 10 drehbar ist. Der Bearbeitungsturm 9 trägt alle Bearbeitungseinrichtungen und wird den jeweiligen Aufgaben entsprechend ausgerüstet. Er hat etwa rechteckige Form und ist an seiner einen Seite mit einer Spindeleinheit 11 versehen, die eine unabhängige Antriebsvorrichtung 12 besitzt. Auf der der Spindeleinheit gegenüberliegenden Seite ist eine Aufnahmevorrichtung 13 zur lösbaren Befestigung von Werkzeugen oder Bearbeitungseinheiten vorgesehen.

Diese Werkzeuge bzw. Bearbeitungseinheiten sind in zwei Magazinen 14 und 15 untergebracht. Das Magazin 14 ist als Schlitten ausgebildet und auf dem Maschinenbett 1 verfahrbar. Vorzugsweise ist der Magazinschlitten 14 über ein Verbindungsstück 16 mit dem Reitstock 4 verbunden, so dass er von diesem mitgeschleppt wird und dadurch Zeit beim Werkzeugwechsel eingespart werden kann. Der Magazinschlitten kann aber auch mit einem eigenen Antrieb versehen werden.

Bei dem dargestellten Ausführungsbeispiel enthält der Magazinschlitten 14 vier Werkzeugeinheiten, und zwar einen Drehwerkzeugschieber 17, einen Scheibenrevolverkopf 18, einen Revolverkopf 19 mit angetriebenen Werkzeugen und eine Bohr-Vorschubeinheit 20.

Der Werkzeugschlitten 5 kann über den Reitstock 4 hinaus vor das Magazin 14 in jeweils eine solche Stellung gefahren werden, dass eine der Werkzeugeinheiten 17 bis 20 in die Werkzeugaufnahme 13 des Bearbeitungsturms geschoben werden kann. Für die Werkzeugübergabe ist jeder Werkzeugeinheit ein Hydraulikkolben 21 zugeordnet, der über eine mit der Aufnahmevorrichtung 13 in Flucht stehende Führung 22 die jeweilige Werkzeugeinheit in die Aufnahmevorrichtung 13 hineinschiebt oder aus dieser herauszieht. Bei der Werkzeugübergabe nimmt der Bearbeitungsturm 9 eine gegenüber der Darstellung in Fig. 1 um 180° gedrehte Lage ein.

Das Magazin 15 ist versetzt zum Magazin 14 ortsfest an oder neben der Maschine angebracht. Es enthält bei dem dargestellten Beispiel zwei Langwerkzeuge in Form von zwei unterschiedlich langen Bohrstangenausrüstungen 23 und 24. Die Werkzeugeinheiten 23 und 24 sind ebenfalls mittels Hydraulikkolben 25 auf Führungen 26 in Richtung auf den Bearbeitungsturm 9 zu und von diesem fort bewegbar. Wegen des Versatzes gegenüber dem Magazin 14 ist am Magazin 14 seitlich ein Ansatz 27 mit einer Führung 28 angebracht, wobei die Führung 28 in der jeweiligen Position eine Fortsetzung einer der Führungen 26 bildet.

Auf der Arbeitsbühne 6 sind Bedienungspaneele 29 vorgesehen, an denen sämtliche Bewegungen für die Bearbeitung und den Werkzeugwechsel einschliesslich der Drehung des Bearbeitungsturms 9 programmiert und gesteuert werden können.

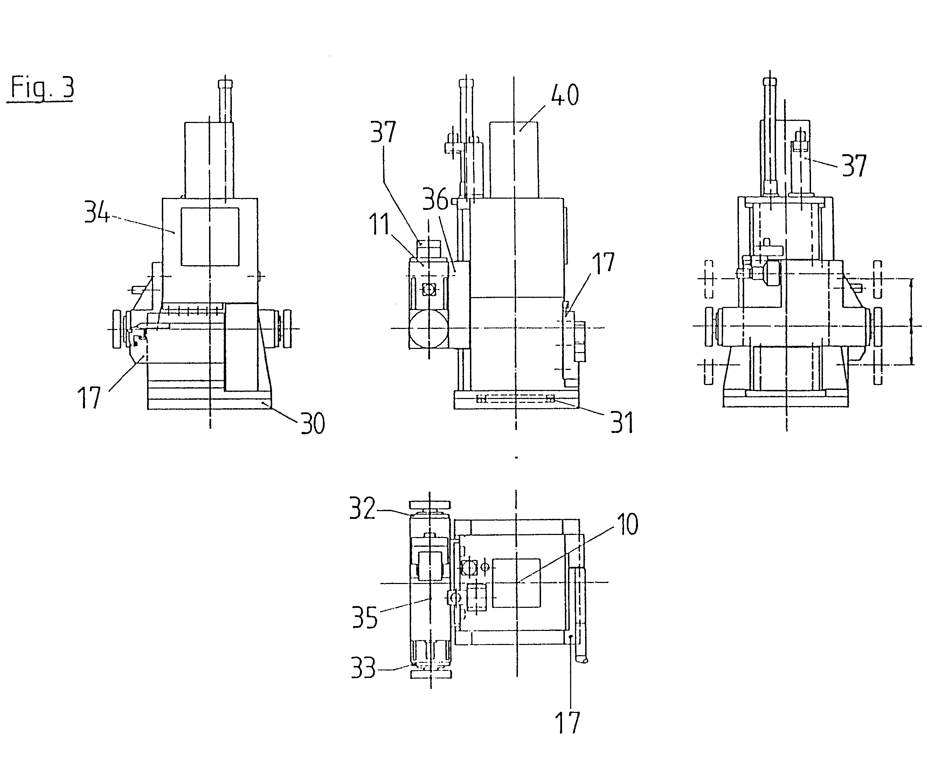

Fig. 3 zeigt den Bearbeitungsturm 9 in drei Ansichten und in der Draufsicht in näheren Einzelheiten. Über eine Grundplatte 30 ist der Ständer 34 des Bearbeitungsturms 9 mit dem Werkzeugschlitten 5 verbunden. Über an sich bekannte Planzahnringe 31 kann der Bearbeitungsturm 9 in jeder Verdrehstellung gegenüber dem Werkzeugschlitten 5 festgesetzt und gegen Bearbeitungs-Reaktionskräfte gesichert werden. An einer Seite des Ständers befindet sich die Spindeleinheit 11, die bei dem dargestellten Ausführungsbeispiel als Fräsgerät eingesetzt wird. Die Spindeleinheit besitzt zwei zur Spindelachse 35 koaxiale Werkzeugaufnahmeköpfe 32 und 33. Die Spindeleinheit 11 ist an einem mittels eines Motors 37 vertikal verfahrbaren Schlitten 36 angebracht, so dass die Spindeleinheit für Bearbeitungsaufgaben numerisch gesteuert vertikal verfahrbar ist oder aber auch bei Nichtgebrauch aus dem Weg gebracht werden kann. Die vertikale Bewegung ist in der rechten Ansicht in Fig. 3 angedeutet.

Die Spindeleinheit 11 besitzt eine unabhängige Antriebsvorrichtung 37, die vorzugsweise ebenso wie die Vertikalbewegung des Schlittens 36 und die Drehbewegung des Bearbeitungsturms 9 um die vertikale Achse 10 numerisch steuerbar ist. Bei Verwendung der Spindeleinheit 11 für Fräsarbeiten übernimmt die Antriebsvorrichtung 37 die Funktion des Hauptantriebs, während die Antriebsvorrichtung 3 abgekuppelt wird und das Werkstück über den Antrieb 8 in eine gewünschte Winkelposition gebracht wird, in der die Fräsbearbeitung vorgenommen werden kann oder aber eine numerisch gesteuerte Vorschubbewegung erfährt.

Auf der der Spindeleinheit 11 gegenüberliegenden Seite des Ständers 34 ist in der Aufnahmevorrichtung ein Drehwerkzeugschieber 17 angebracht. Mit einem dergestalt ausgerüsteten Bearbeitungsturm lässt sich ohne Unterbrechung durch Umspannen oder Werkzeugwechsel beispielsweise eine Drehbearbeitung und eine anschliessende Fräsbearbeitung durchführen. Die Energiezuführung zum Ständer 34 und allen Anbaueinheiten erfolgt über eine zentrale Drehdurchführung 40 entlang der vertikalen Drehachse 10.

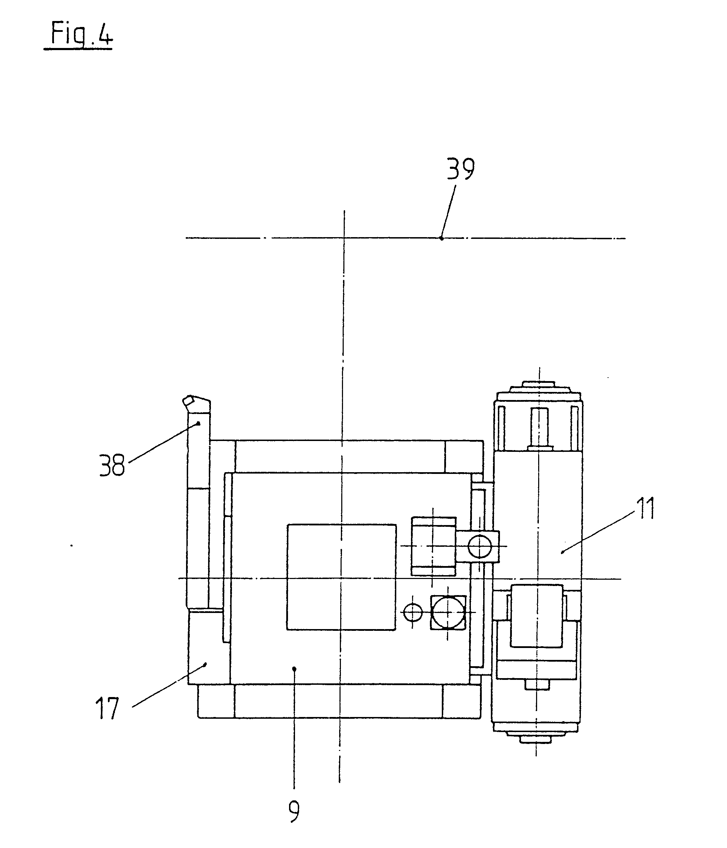

Die Vielseitigkeit der erfindungsgemäss ausgebildeten Maschine ist aus den Fig. 4 bis 8 ersichtlich.

Fig. 4 zeigt die Ausrüstung des Bearbeitungsturms 9 ausschliesslich mit einem Drehwerkzeugschieber 17, wobei sich der Drehmeissel 38 in einer üblichen Bearbeitungsposition zu einem auf die Maschinenhauptachse 39 zentrierten Werkstück befindet.

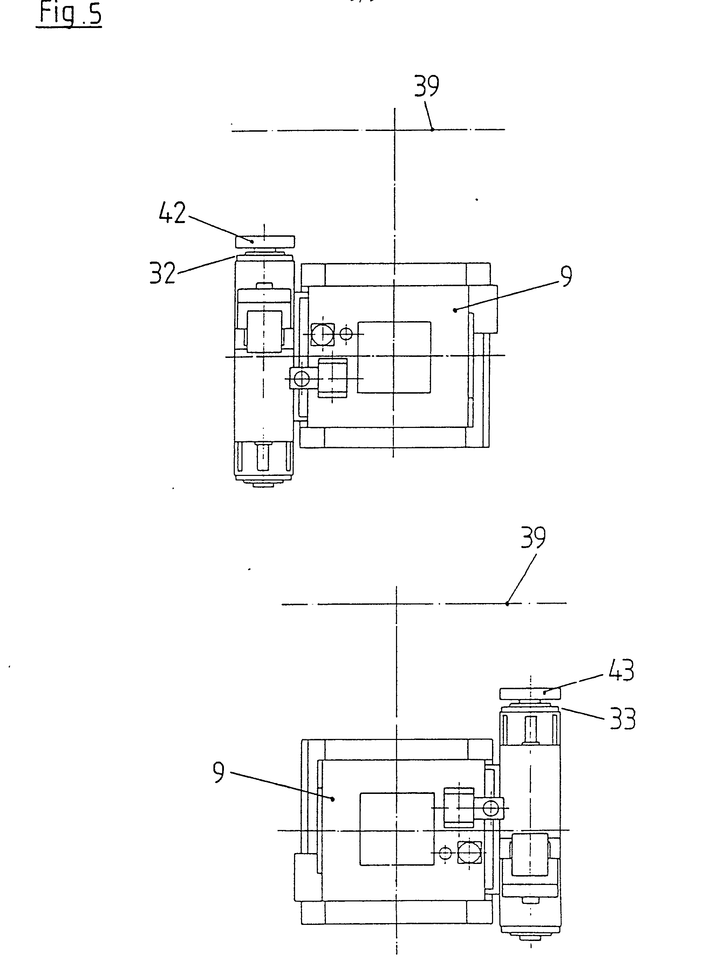

Fig. 5 zeigt die Ausrüstung des Bearbeitungsturms 9 mit Fräswerkzeugen 42 und 43 an den beiden Werkzeugaufnahmen 32 und 33 in verschiedenen Positionen, wodurch ein Heranfahren an das Werkstück von zwei Seiten möglich ist.

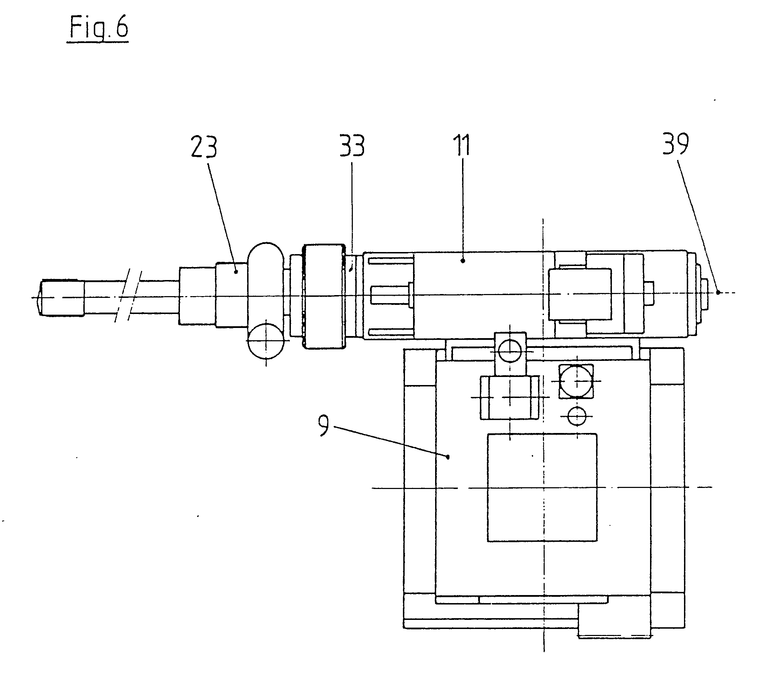

Fig. 6 zeigt die Ausrüstung mit einer Tiefbohreinrichtung 23, die hier an der Werkzeugaufnahme 33 der Spindel 11 angebracht ist, so dass in dem Werkstück eine zur Hauptmaschinenachse 39 koaxiale Bohrung angebracht werden kann.

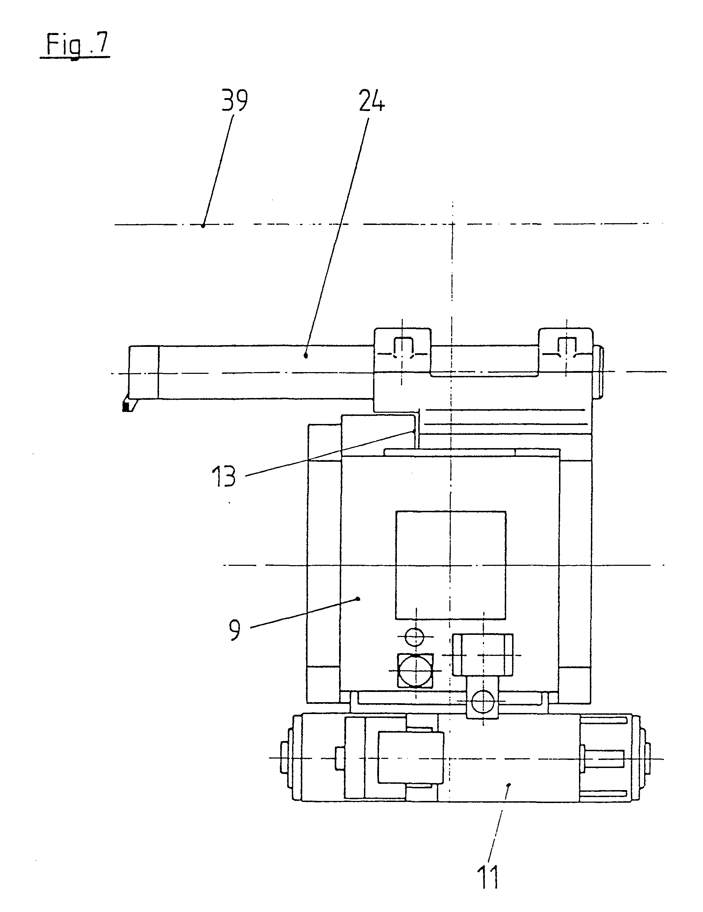

Fig. 7 zeigt den Bearbeitungsturm 9 mit einer Bohrstangenausrüstung 24 in der Aufnahmevorrichtung 13.

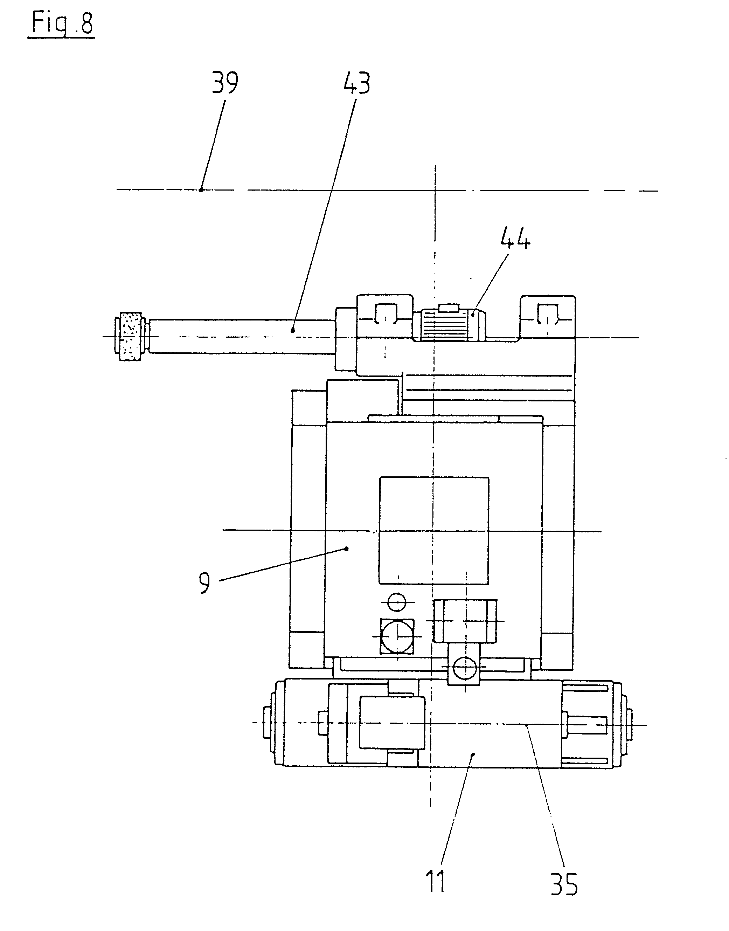

Fig. 8 schliesslich zeigt die Ausrüstung des Bearbeitungsturms 9 mit einer Schleifspindel 43, die über einen unabhängigen Motor 44 antreibbar ist.

Bei den dargestellten Ausführungsbeispielen ist der Bearbeitungsturm 9 jeweils in Positionen dargestellt, in denen die Mittelachse 35 der Spindeleinheit 11 entweder parallel oder senkrecht zur Maschinenhauptachse 39 verläuft. Natürlich kann der Bearbeitungsturm im Bedarfsfall auch so arretiert werden, dass die Achse 35 schräg zur Maschinenhauptachse 39 verläuft.

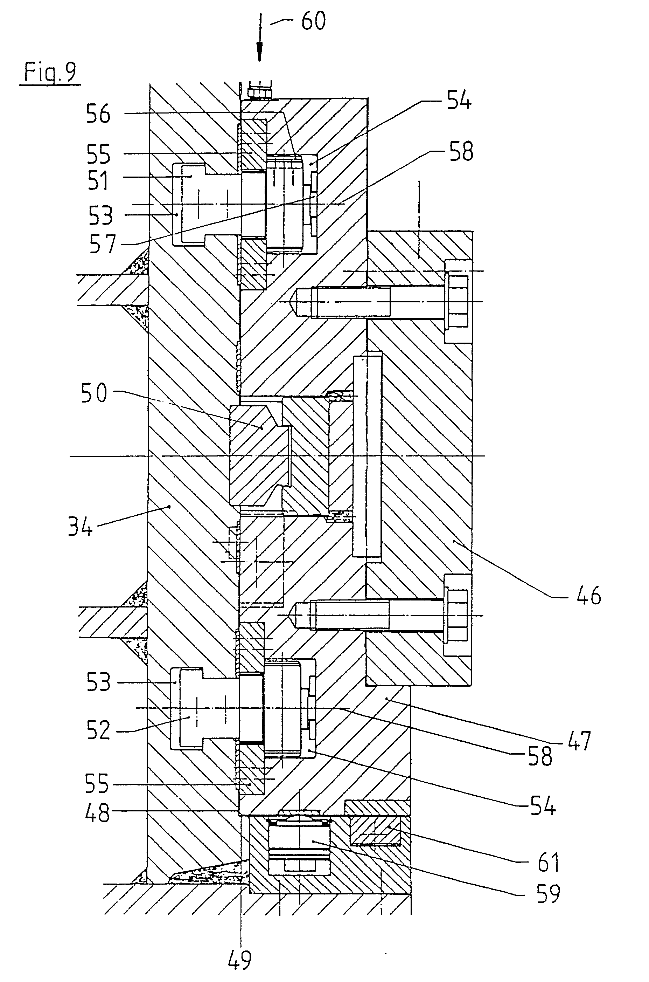

In Fig. 2 ist innerhalb des gestrichelten Kreises ein in der Aufnahmevorrichtung angebrachtes Werkzeug nur schematisch angedeutet. Fig. 9 zeigt den Inhalt des Kreises 45 in vergrösserter Darstellung, aus der die Einzelheiten über den Aufbau und die Befestigung einer Werkzeugeinheit am Ständer 34 des Bearbeitungsturms 9 deutlicher zu erkennen sind.

Es ist ersichtlich, dass der Werkzeugschieber 46 an einer Palette 47 befestigt ist, wobei die Palette 47 für alle Werkzeugeinheiten die gleiche Ausbildung besitzt, so dass alle Werkzeugeinheiten in die Aufnahmevorrichtung des Ständers 34 passen. Die Palette ist kraft- und formschlüssig mit der Aufnahmevorrichtung verbindbar. Die Aufnahmevorrichtung besitzt zwei aneinander angrenzende, rechtwinklige Anlageflächen 48 und 49 für die Palette, von denen die kürzere Fläche 49 horizontal und die längere Fläche 48 vertikal verläuft. In der vertikalen Anlagefläche sind drei horizontal verlaufende Führungen vorgesehen, auf die die Palette 47 von der Seite her mittels der Hydraulikkolben 21 des Magazinschlittens 14 (Fig. 2) aufschiebbar ist. Die mittlere Führung 50 besteht aus einer am Ständer 34 befestigten Leiste, die eine grobe Führung beim Einschieben der Palette 47 bewirkt. Die obere Führung 51 und die untere Führung 52 sind als Spannleisten ausgebildet, die mit Spiel in T-förmigen Ausnehmungen 53 des Ständers ruhen und an ihren freien, über die Anlagefläche 48 herausstehenden Enden in Profilnuten der Palette 47 eingreifen, wobei die Profilnuten 54 ebenfalls T-förmig ausgebildet sind, so dass die freien Enden der Spannleisten an der Palette 47 angebrachte Leisten 55 hintergreifen. Zur Entlastung beim Ein- und Ausschieben der Palette sind an den freien Enden der Spannleisten Rollen 56 und 57 angebracht, die jeweils um eine Achse 58 drehbar sind.

In die untere Anlagefläche 49 sind Stützrollen oder Stützkugeln 59 eingelassen, die im Normalzustand unterhalb der Anlagefläche 49 liegen, die jedoch durch nicht dargestellte Mittel beim Palettenwechsel so weit anhebbar sind, dass sie über die Anlagefläche vorstehen. Beim Ein- und Ausschieben der Palette 47 wird diese auf den Stützrollen bzw. Stützkugeln 59 entlangbewegt.

Nachdem die Palette ihre vorgegebene Lage in der Aufnahmevorrichtung erreicht hat, werden die Stützrollen bzw. Stützkugeln 59 abgesenkt, so dass die Palette auf der Anlagefläche 49 ruht. Eine Pressvorrichtung 60, die nur durch einen Pfeil angedeutet ist, sorgt dafür, dass eine einwandfreie Anlage der Palette an der Fläche 49 hergestellt wird. Durch Keilschuhe 61 wird die positionierte Palette 47 abgefangen.

Als letzter Schritt werden die Spannleisten 51 und 52 hydraulisch betätigt, so dass sie die Palette 47 gegen die Anlagefläche 4 ziehen. Die Palette hat damit ihre endgültige Betriebslage erreicht, die jederzeit und für jede andere Palette reproduzierbar hergestellt werden kann.

Die erfindungsgemässe Ausbildung des Bearbeitungsturms und der zugehörigen Werkzeugmagazin- und Werkzeugwechselvorrichtung ist insbesondere für Schwerdrehmaschinen von grossem Vorteil, mit denen grosse und damit extrem schwere Werkstücke mehrfachen Bearbeitungsverfahren unterzogen werden müssen. Allein der Drehwerkzeugschieber 17 besitzt bei einem praktisch ausgeführten Beispiel ein Gewicht von über 12 t, so dass ersichtlich ist, welche Erleichterung durch die erfindungsgemässen Massnahmen erzielbar ist.

**Patentansprüche**

1. Drehmaschine mit einer Antriebsvorrichtung (3) für eine Werkstückaufnahme (7) mit einem Reitstock (4) und mit einer auf dem Maschinenbett (1) verfahrbaren, um eine vertikale Achse (10) drehbaren und in einer gewünschten Winkelstellung arretierbaren Werkzeugaufnahme-Vorrichtung (9), die in zwei Freiheitsgraden in einer horizontalen Ebene verfahrbar und mit einer antreibbaren Spindeleinheit (11) vesehen ist, wobei die drehbare Werkzeugaufnahme-Vorrichtung (9) ausserdem wenigstens eine Aufnahemvorrichtung (13) für Werkzeuge besitzt, und wobei die Antriebsvorrichtung (3) für die Werkstückaufnahme (7) abkuppelbar ist und statt dessen ein numerisch steuerbarer Antrieb (8) für eine exakte Winkelpositionierung des Werkstücks betatigbar ist, dadurch gekennzeichnet, dass die Werkzeugaufnahme-Vorrichtung als ein Bearbeitungsturm (9) ausgebildet ist, dass die Spindeleinheit (11) des Bearbeitungsturmes (9) in der Höhe verstellbar ist, dass die Spindeleinheit (11) an beiden Seiten mit einer Werkzeugaufnahme (32, 33) ausgerüstet ist, dass die Aufnahmevorrichtung (13) zur lösbaren Befestigung von Werkzeugen oder Bearbeitungseinheiten (17–20) ausgebildet ist, und dass sowohl die Drehbewegung des Bearbeitungsturms (9) um seine vertikale Achse (10) als auch die Höhenverstellung der Spindeleinheit (11) als Vorschubbewegung des jeweils verwendeten Werkzeugs unabhängig numerisch steuerbar ist.

2. Drehmaschine nach Anspruch 1, dadurch gekennzeichnet, dass die Spindeleinheit (11) und die Aufnahmevorrichtung (13) an gegenüberliegenden Seiten des Bearbeitungsturms (9) angeordnet sind.

3. Drehmaschine nach Anspruch 2, dadurch gekennzeichnet, dass zur Arretierung des Bearbeitungsturms (9) in der gewählten Winkelstellung Planzahnringe (31) dienen.

4. Drehmaschinen nach einem der vorhergehenden Ansprüche 1–3, dadurch gekennzeichnet, dass die Spindel der Spindeleinheit (11) einen unabhängigen, numerisch gesteuerten Antrieb besitzt.

5. Drehmaschine nach einem der vorhergehenden Ansprüche 1–4, dadurch gekennzeichnet, dass zumindest die an der Werkzeugaufnahme (13) anzubringenden Werkzeuge bzw. Werkzeugeinheiten (17–20) in einem Magazinschlitten (14) angeordnet sind.

6. Drehmaschine nach Anspruch 5, dadurch gekennzeichnet, dass der Magazinschlitten (14) hinter dem Reitstock (4) angeordnet ist.

7. Drehmaschine nach Anspruch 6, dadurch gekennzeichnet, dass der Magazinschlitten (14) mit dem Reitstock (4) mechanisch verbunden ist und dessen Verschiebebewegung folgt.

8. Drehmaschine nach Anspruch 6, dadurch gekennzeichnet, dass der Magazinschlitten (14) einen eigenen Vorschubantrieb besitzt.

9. Drehmaschine nach einem der vorhergehenden Ansprüche 1–8, dadurch gekennzeichnet, dass der Werkzeugschlitten (5) für die Werkzeugübernahme am Reitstock (4) vorbei bis vor den Magazinschlitten (14) verfahrbar ist.

10. Drehmaschine nach Anspruch 9, dadurch gekennzeichnet, dass die Werkzeuge bzw. Werkzeugeinheiten (17–20) auf jeweils einer gleich ausgebildeten Palette (47) angeordnet sind, die kraft- und formschlüssig mit der Aufnahmevorrichtung (13) am Bearbeitungsturm verbindbar ist.

11. Drehmaschine nach Anspruch 10, dadurch gekennzeichnet, dass die Aufnahmevorrichtung (13) zwei aneinander angrenzende rechtwinklige Anlageflächen (48, 49) für die Palette (47) besitzt, von denen eine kürzere horizontal und eine längere vertikal verläuft, und dass in der vertikalen Anlagefläche (48) horizontal verlaufende Führungen (50, 51, 52) vorgesehen sind, auf die die Palette (45) von der Seite her aufschiebbar ist.

12. Drehmaschine nach Anspruch 11, dadurch gekennzeichnet, dass eine mittlere Führungsleiste (50) und eine obere und untere Führungsleiste (51 bzw. 52) vorhanden sind, von denen die obere und untere Führungsleiste als Spannleisten ausgeführt sind.

13. Drehmaschine nach Anspruch 12, dadurch gekennzeichnet, dass die Spannleisten (51, 52) an ihren freien, in Profilnuten (54) der Palette (47) eingreifenden Enden mit Laufrollen (56, 57) versehen sind.

14. Drehmaschine nach Anspruch 13, dadurch gekennzeichnet, dass in der horizontalen Anlagefläche (49) Stützrollen oder Stützkugeln (59) angeordnet sind, die im Normalzustand unterhalb der Anlagefläche (49) liegen, beim Palettenwechsel jedoch soweit anhebbar sind, dass sie über die Anlagefläche vorstehen.

15. Drehmaschine nach Anspruch 14, dadurch gekennzeichnet, dass eine Pressvorrichtung (60) vorgesehen ist, durch die die eingesetzte Palette (47) an die horizontale Anlagefläche (49) andrückbar ist.

16. Drehmaschine nach einem der vorhergehenden Ansprüche 1–15, dadurch gekennzeichnet, dass im Magazinschlitten (14) für jede Werkzeugeinheit (17–20) ein Hydraulikantrieb (21) vorhanden ist, durch den eine zugeordnete Palette in die Aufnahmevorrichtung (13) einschiebbar und von dieser in den Magazinschlitten (14) zurückbewegbar ist.

17. Drehmaschine nach einem der vorhergehenden Ansprüche 1–16, dadurch gekennzeichnet, dass ein weiteres stationäres Magazin (15) für Langwerkzeuge (23, 24) vorhanden ist, an das der Werkzeugschlitten (5) heranfahrbar ist.

**Revendications**

1. Tour mini d'un dispositif d'entraînement (3), d'une fixation de pièce à usiner (7), d'une contre-poupée (4) et d'un dispositif de fixation d'outils (9) qui peut être déplacé sur le banc de machine (1), orienté autour d'un axe vertical (10), bloqué dans une position angulaire souhaitée, qui peut être déplacé suivant deux degrés de liberté sur un plan horizontal et qui est équipé d'une unité-broches (11) laquelle peut être entraînée, le dispositif orientable de fixation (13) pour les outils et le dispositif d'entraînement (3) de la fixation de pièce (7) pouvant être découplé, un entraînement à commande numérique (8) pouvant, à sa place, être actionné pour un positionnement angulaire exact de la pièce à usiner, caractérisé en ce que le dispositif de fixation d'outils est réalisé sous forme d'une tour d'usinage (9), en ce que l'unité-broches (11) de la tour d'usinage (9) est réglable en hauteur, en ce que l'unité-broches (11) est équipée des deux côtés d'un dispositif de fixation d'outils (32, 33), en ce que le dispositif de fixation (13) est réalisé de façon à ce que des outils ou d'unités d'usinage (17–20) puissent y être fixés de manière amovible, et en ce qu'aussi bien le mouvement rotatif de la tour d'usinage (9) autour de son axe vertical (10) que le réglage en hauteur de l'unité-broches (11) sont commandable numériquement et indépendamment comme avancement de l'outil utilisé.

2. Tour suivant la revendication 1, caractérisé en ce que l'unité-broches (11) et le dispositif de fixation (13) sont sur les côtés opposés de la tour d'usinage (9).

3. Tour suivant la revendication 2, caractérisé en ce que des couronnes à denture plate (31) servent au blocage de la tour d'usinage (9) dans la position angulaire choisie.

4. Tour suivant l'une des précédentes revendications 1 à 3, caractérisé en ce que la broche de l'unité-broches (11) possède un entraînement indépendant à commande numérique.

5. Tour suivant l'une des précédentes revendications 1 à 4, caractérisé en ce qu'au moins les outils ou unités d'outils (17–20) à fixer au dispositif de fixation d'outils (13) sont dans un chariot à magasin (14).

6. Tour suivant la revendication 5, caractérisé en ce que le chariot à magasin (14) est derrière la contre-poupée (4).

7. Tour suivant la revendication 6, caractérisé en ce que le chariot à magasin (14) est mécaniquement relié à la contre-poupée et suit le mouvement de déplacement de cette dernière.

8. Tour suivant la revendication 6, caractérisé en ce que le chariot à magasin (14) possède son propre entraînement d'avance.

9. Tour suivant l'une des précédentes revendications 1 à 8, caractérisé en ce que le chariot à outils (5) peut être déplacé jusqu'au chariot à magasin (14) en passant devant la contre-poupée, pour le transfert des outils.

10. Tour suivant la revendication 9, caractérisé en ce que les outils ou unités d'outils (17–20) sont chacun sur une palette (47) de réalisation identique, qui peut être raccordée par la forme et la force au dispositif de fixation (13) de la tour d'usinage.

11. Tour suivant la revendication 10, caractérisé en ce que le dispositif de fixation (13) possède pour la palette (47) deux surfaces de fixation (48, 49) rectangulaires et contiguës l'une à l'autre, dont la plus courte est horizontale et l'autre, plus longue, est verticale, et en ce que, dans la surface de fixation verticale sont prévus des guides horizontaux (50, 51, 52) sur lesquels la palette (45) peut glisser latéralement.

12. Tour suivant la revendication 11, caractérisé en ce qu'une barre conductrice (50) et une barre conductrice supérieure et inférieure (51 et 52) sont prévues, dont les deux dernières, les barres supérieure et inférieure, sont réalisées sous forme de barres de serrage.

13. Tour suivant la revendication 12, caractérisé en ce que les barres de serrage (51, 52) sont, à leurs extrémités libres, pourvues de galets de roulement (56, 57), qui s'accrochent dans des rainures profilées (54) de la palette (47).

14. Tour suivant la revendication 13, caractérisé en ce que, dans la surface de fixation horizontale (49), sont disposés des galets ou billes support (59) qui, à l'état normal, se trouvent sous la surface de fixation (49), mais qui peuvent être soulevés de façon à ce qu'ils sortent sur la surface de fixation lors d'un changement de palette.

15. Tour suivant la revendication 14, caractérisée en ce qu'un dispositif de serrage (60) est prévu au moyen duquel la palette insérée (47) peut être serrée contre la surface de fixation horizontale (49).

16. Tour suivant l'une des précédentes revendications 1 à 15, caractérisé en ce qu'il existe, dans le chariot à magasin (14), un entraînement hydraulique pour chaque unité d'outils (17–20), au moyen duquel une palette déterminée peut être glissée dans le dispositif de raccordement (13) et ramenée de ce dernier dans le chariot à magasin (14).

17. Tour suivant l'une des précédentes revendications 1 à 16, caractérisée en ce qu'il existe un autre magasin stationnaire (15) pour outils longs (23, 24), auprès duquel on peut approcher le chariot à outils (5).

## Claims

1. Turning machine, comprosing a drive device (3) for a workpiece holder (7), comprising a tailstock (4) and a tool carrier device (9), traversable on the machine bed (1), rotatable about a vertical axis (10) and able to be locked in a desired angular setting, which tool carrier device can be traversed in a horizontal plane with two degrees of freedom and is provided with a drivable spindle unit (11), the rotatable tool carrier device (9) also possessing at least one seating device (13) for tools, and the drive device (3) for the workpiece holder (7) being capable of being uncoupled and a numerically controllable drive (8) for an exact angular positioning of the workpiece being able to be actuated instead of it, characterized in that the tool carrier device is constructed as a machining turret (9), that the spindle unit (11) of the machining turret (9) is adjustable in height, that the spindle unit (11) is equipped at both ends with a tool holder (32, 33), that the seating device (13) is constructed for the releasable fixing of tools or machining units (17–20), and that both the rotary movement of the machining turret (9) about its vertical axis (10) and also the height adjustment of the spindle unit (11) are each independently numerically controllable as a feed movement of the tool being used.

2. Turning machine according to Claim 1, characterized in that the spindle unit (11) and the seating device (13) are disposed on opposite sides of the machining turret (9).

3. Turning machine according to Claim 2, characterized in that plane toothed rings (31) serve for locking the machining turret (9) in the selected angular setting.

4. Turning machine according to one of the preceding Claims 1 to 3, characterized in that the spindle of the spindle unit (11) possesses an independent, numerically controlled drive.

5. Turning machine according to one of the preceding Claims 1 to 4, characterized in that at least the tools or tool units (17–20) to be mounted on the tool carrier (13) are disposed in a magazine carriage (14).

6. Turning machine according to Claim 5, characterized in that the magazine carriage (14) is disposed behind the tailstock (4).

7. Turning machine according to Claim 6, characterized in that the magazine carriage (14) is mechanically connected with the tailstock (4) and follows its displacement movement.

8. Turning machine according to Claim 6, characterized in that the magazine carriage (14) has its own feed drive.

9. Turning machine according to one of the preceding Claims 1 to 8, characterized in that the tool carriage (5) can be traversed past the tailstock (4) as far as in front of the magazine carriage (14) for the purpose of tool transfer.

10. Turning machine according to Claim 9, characterized in that the tools or tool units (17–20) are each disposed on a pallet (47) of like construction, which can be connected force-transmittingly and form-fittingly with the seating device (13) on the machining turret.

11. Turning machine according to Claim 10, characterized in that the seating device (13) has two mutually adjacent, perpendicular bearing surfaces (48, 49) for the pallet (47), of which a shorter one extends horizontally and a longer one vertically, and that in the vertical bearing surface (48) horizontally extending guides (50, 51, 52) are provided, onto which the pallet (45) can be slid from the side.

12. Turning machine according to Claim 11, characterized in that a median guide bar (50) and an upper and a lower guide bar (51, 52 respectively) are provided, of which the upper and lower guide bars are constructed as clamping bars.

13. Turning machine according to Claim 12, characterized in that the clamping bars (51, 52) are provided, at their free ends engaging in profile grooves (54) of the pallet (47), with rollers (56, 57).

14. Turning machine according to Claim 13, characterized in that in the horizontal bearing surface (49) support rollers or support balls (59) are disposed, which in the normal condition lie underneath the bearing surface (49) but, when a pallet is being changed, can be raised sufficiently to project above the bearing surface.

15. Turning machine according to Claim 14, characterized in that a pressing device (60) is provided, by which the pallet (47) used can be pressed against the horizontal bearing surface (49).

16. Turning machine according to one of the preceding Claims 1 to 15, characterized in that in the magazine carriage (14) a hydraulic drive (21) is provided for each tool unit (17–20), by which hydraulic drive an associated pallet can be pushed into the seating device (13) and be moved back from this seating device into the magazine carriage (14).

17. Turning machine according to one of the preceding Claims 1 to 16, characterized in that a further fixed magazine (15) for long tools (23. 24) is provided, up to which the tool carriage (5) can be traversed.

Fig.1

EP 0 193 533 B1

9/19

25

15

24

21

23

14

26

22

1 39 5 4

3 2 8 7

9

12

13

9

29

11 6

27

Fig.2

EP 0 193 533 B1

Fig.3

Fig.4

## Fig. 5

Fig.6

Fig.7

Fig.8

9/9

Fig.9